# EUROPEAN PATENT APPLICATION

(11) **EP 1 351 173 A1**
(43) Date of publication of application: **08.10.2003**
(21) Application number: 01967838.2
(22) Date of filing: 25.09.2001
(51) Int. Cl.: G06F 17/60

(54) **DATA COLLECTING SYSTEM, TRANSACTION SUPPORTING SYSTEM, DATA COLLECTING METHOD AND BUSINESS SUPPORTING PROGRAM**

(30) Priority: 22.09.2000 JP 2002289634
(71) Applicant: Dojo, Makoto, Minato-ku, Tokyo 108-0022 (JP)
(72) Inventor: DOJO, Makoto, Minato-ku, Tokyo 108-0022 (JP); DOJO, Kenshin, Omihachiman-shi, Shiga 523-0894 (JP); TSUJIOKA, Hayato, Hikone-shi, Shiga 522-0008 (JP)
(74) Representative: Jenkins, Peter David
(86) International application number: JP0108322
(87) International publication number: WO03046786

(57) **Abstract**

In an effort to promote participation in business between consumers and providers and stimulate basic business transactions, a business support program is distributed to providers, and the use of this business support program by the providers is encouraged, the result of which is that data on the provider side can be efficiently collected, and this data can be utilized to efficiently put providers and consumers in touch with each other.

## Description

### Technical Field

The present invention relates to a data collection system, etc., for collecting information related to a business transaction conducted between a merchandise or service provider and a consumer.

### Background Art

Computer message boards used to be the most common way of putting consumers in touch with providers regarding merchandise and so forth, but today electronic business transactions are being conducted through a communication network called an electronic marketplace (eMP), which takes this idea a step further.

However, the active participation of both consumers and providers is essential to the success of such transactions, giving them the feel of nothing more than conventional business transactions that have been computerized. This and other factors, such as concerns over reliability, have made it difficult to generate the motivation necessary for participation, and the lack of participants has created so much inconvenience that it is difficult for real business transactions to be concluded.

In view of this, the primary object of the present invention is to provide a data collection system, etc., with which data concerning the usage status of a business support program can be efficiently collected, and this collected data can be effectively utilized to bring providers and consumers together more efficiently, so that more electronic business transactions can be carried out.

### Disclosure Of Invention

More specifically, the data collection system according to Claim 1 of the present invention comprises status data receiving means 1 for receiving, upon the approval of a merchandise or service provider, status data indicating all or part of the usage status of a business support program distributed to the provider, and status data storage means 2 for storing status data received by the status data receiving means.

"Usage status" as used herein includes how the business support program is being used, as well as the business situation of providers obtained through this usage, results of business transactions obtained by the use of this program, and so on.

This allows transaction results and the business situation of providers of merchandise or services can be collected, and this information can be used to operate a market more efficiently, to stimulate transactions through information disclosure, and so on.

As a specific embodiment of the status data storage means 2, it is preferable for the above-described status data obtained from a plurality of providers to be stored in a common format, since this facilitates the efficient utilization of the status data.

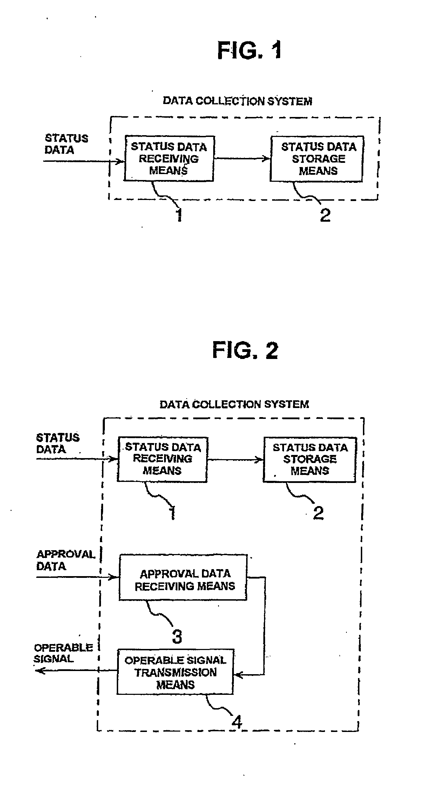

In a specific aspect for obtaining the approval of a provider is illustrated in Fig. 2, in which the system further comprises approval data receiving means 3 for receiving approval data indicating whether the above-described provider has given approval, and operable signal transmission means 4 for sending an operable signal indicating that the operation of a computer is permitted on the basis of the above-described business support program in a case in which the received approval data indicates that approval has been granted, or for sending an operable signal indicating that this operation is denied in the opposite case.

The phrase "whether the operation of a computer is permitted on the basis of the business support program" here includes the sense of whether or not the installation of a business support program is permitted.

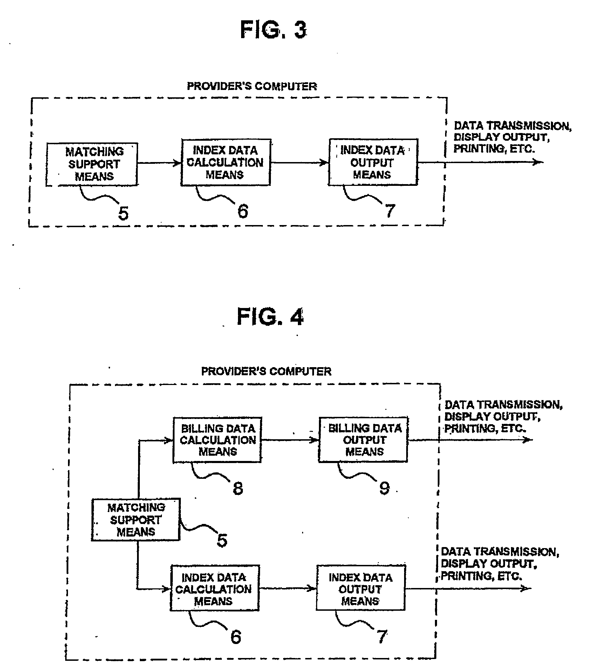

If the business of a provider is, for example, providing an eMP in which buyers and sellers of specific merchandise or the like are brought together and matched, the above-described status data includes transaction index data indicating a transaction index calculated on the basis of the matching status, and as shown in Fig. 3, it is preferable if the business support program installs the following functions in the provider's computer (the one used by the above-described provider): matching support means 5 for supporting the work of matching up buyers and sellers, index data calculation means 6 for calculating transaction index data indicating a transaction index on the basis of the matching status, and index data output means 7 for outputting this transaction index data.

"Matching status" as used herein includes the status indicating the matching procedure, such as the status of the limits or entries of various sellers or buyers, as well as the status according to transaction results produced by a successful match, such as a transaction amount or transaction conditions.

With this system, transaction indexes are calculated and grouped by merchandise or service, so these indexes can be made public to consumers and so forth by the index data output means, which promotes appropriate business transactions and also enhances reliability for the parties of the transaction, which in turn stimulates business transactions in an eMP.

If the above-described status data includes billing data indicating charges for the use of the matching support means 5, as shown in Fig. 4, it is preferable if the above-described business support program further installs the following functions in the provider's computer: billing data calculation means 8 for calculating the above-described billing data on the basis of the use of the matching support means 5, and billing data output means 9 for outputting this billing data.

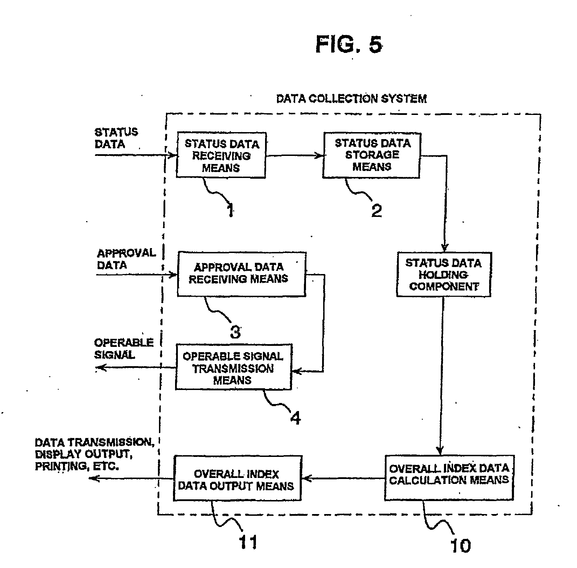

A single industry may include more than one eMP, and especially if viewed from a global perspective, a number of them are believed to exist. Each of these is operating independently. To gather transaction information from each of these independent eMPs and calculate a more global overall transaction index, as shown in Fig. 5, it is favorable that the system further comprises an overall index data calculation means 6 for calculating the overall transaction index data indicating overall information about a transaction index on the basis of the transaction index data received by the above-described status data receiving means 1, and overall index data output means 7 for outputting the above-described overall transaction index data.

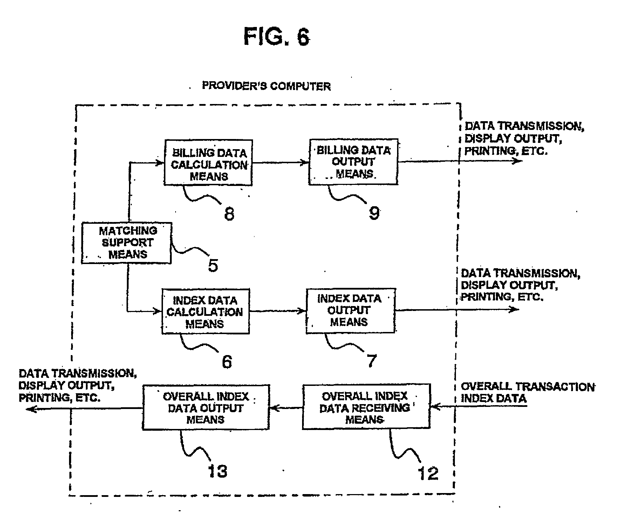

In order to disclose the above-described overall transaction index data to each eMP provider or to the buyers and sellers participating in that eMP, as shown in Fig. 6, it is preferable if the above-described business support program further installs the following functions in the provider's computer: overall index data receiving means 12 for receiving the above-described overall transaction index data, and overall index data output means 13 for outputting the received above-described overall transaction index data.

There is no need to provide billing data calculation means or index data calculation means to the above-described provider's computer, and these functions may be handled by the central computer.

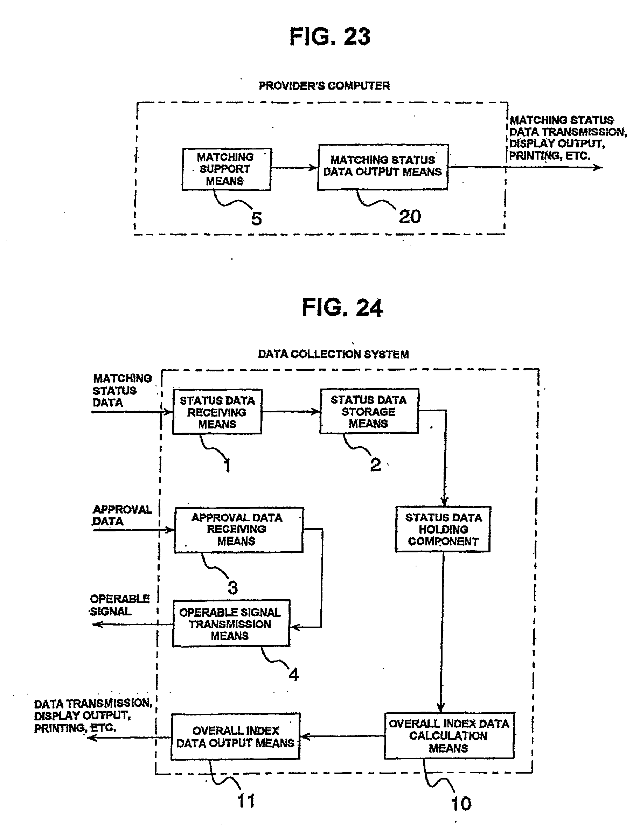

In this case, as shown in Fig. 23, the above-described business support program should install the following functions in the provider's computer (the one used by the above-described provider): matching support means 5 for supporting the work of matching up buyers and sellers, and matching status data output means 20 for outputting the matching status data, which is data according to the matching status.

Meanwhile, as shown in Fig. 24, it is favorable if the data collection system side is provided with overall index data calculation means 10 for calculating the overall transaction index data indicating overall information about a transaction index on the basis of the transaction conclusion data received by the above-described status data receiving means 1, and overall index data output means 11 for outputting the above-described overall transaction index data.

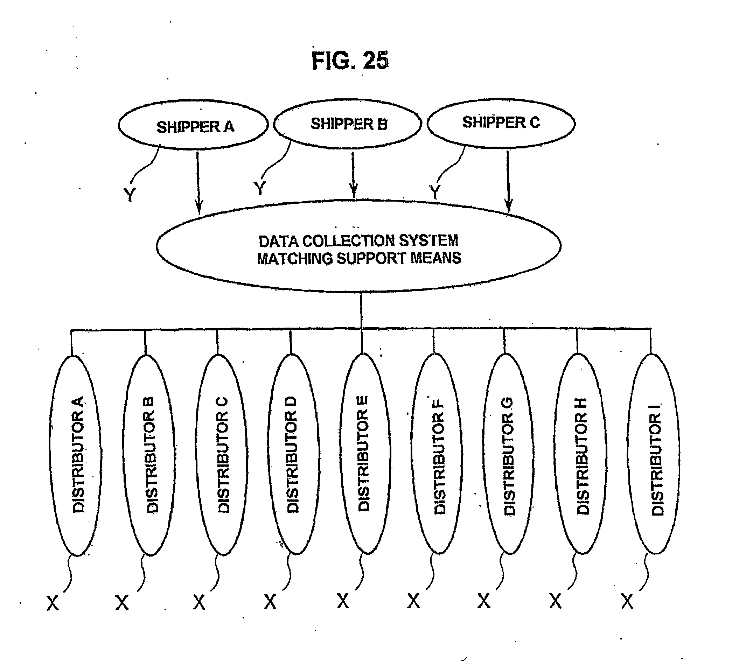

Meanwhile, if the above-described provider is someone who provides a distribution service, that is, a distributor, as shown in Fig. 25, it is favorable that the computer installed at the data center includes a data collection system comprising receiving means for receiving, upon the approval of distributor X (a merchandise or service provider), all or part of the usage status of a business support program distributed to this distributor, and storage means for storing the data received by the receiving means, and also is loaded with a program for utilizing the data stored in the storage means of this data collection system to achieve the function of the matching support means 5 of supporting the work of matching up the distributor with a shipper Y (consumer).

Preferably, the system accomplishes the functions of rental offer receiving means for receiving rental offer information about available vehicles from distributors, and cargo information provision means for providing cargo-related information to distributors according to the received rental offer information, or achieves the function of cargo information provision means for selecting available vehicle information from the stored data and providing cargo-related information corresponding to this available vehicle information to distributors.

When a distributor inputs rental offer information for an available vehicle and sends this information to the data center, it is preferable if the delivery status is displayed on the computer used by the distributor, and a rental offer information request button is appended to the portion of the display where available vehicles are shown.

The above-described data preferably includes at least available vehicle information indicating the available vehicle status.

Here, the phrase "business support program distributed to the provider" includes an aspect in which software is distributed to the provider via a CD-ROM or other such recording medium, or is downloaded to the computer being used by the provider via the Internet or another such communication network, or the business support program can be provided in usable form to the provider by ASP, HTML application, Active X application, JAVA, XML application, or another such system.

The phrase "supports the work of matching" includes performing matching automatically, as well as printing or displaying information that would assist a human in performing the matching work.

In addition to the business support program being used by the vehicle dispatcher of the distributor, there is also a case in which a driver makes use of the business support program. Examples of the device used by the driver in such a case include a cellular phone, a mobile device, or another such portable information device.

Furthermore, there may just one shipper, or a number of them. More specifically, a single shipper representing a number of shippers may operate a data center. This operator may also double as a distributor.

An example of matching being performed automatically is as follows: Data according to provision conditions, including the price at which a product or service will be provided, is received from the above-described provider, and this provision condition data is linked to that provider and stored in a specific provision condition storage component, while data according to purchase conditions, including the price at which a product or service will be purchased, is received from the above-described consumer, and this purchase condition data is linked to that consumer and stored in a specific purchase condition storage component. A plurality of provision condition data and a plurality of purchase condition data according to a common product or service are selected from the above-described provision condition storage component and purchase condition storage component, the selected plurality of provision condition data and the plurality of purchase condition data are compared, and regardless of whether the provision price and the purchase price are the same or not, some or all of the plurality of provision condition data are matched with some or all of the plurality of purchase condition data.

"Provision price" as used herein includes not only a price without a margin, such as 100 yen or 1000 yen, but also to a price with a margin, such as between 100 yen and 200 yen. The same applies to "purchase price." The phrase "linked to the provider" includes not only utilizing a password or other such identifier given to a provider and linking provision condition data to that provider, but also linking to a computer terminal when a provider has accessed the system through a computer terminal, for instance. The same applies to "linked to the consumer."

Thus, since matching is performed regardless of whether the provision price is the same as the purchase price, a number of transactions can be concluded easily, with a simple procedure and in a single matching step. Accordingly, the difficulty and scarcity of concluded transactions, which were drawbacks to conventional cyber-auction systems and so forth, can be overcome, and a speedy conclusion to a transaction can also be ensured. Excessive price competition is also less likely to occur, making it easier to maintain healthy business transactions. In addition, since information about buying and selling a product or service is gathered together in one place, this information can be analyzed and effectively put to use in business trends and so forth.

Furthermore, if the system is designed so that transactions can be concluded without changing the provision price in the received provision condition data or the purchase price in the purchase condition data, the transaction can be concluded at the price that both the consumer and the provider originally desired, which eliminates the dissatisfaction and sense of unfairness that lingered in the conventional auctions and so forth mentioned above. Another benefit is that the procedure leading up to the conclusion of the transaction can be simplified. To obtain the same effect, the system may also be designed so that a transaction is concluded by changing either the provision price in the received provision condition data or the purchase price in the received purchase condition data.

If the system is designed so that the purchase price, which is the combined total of the various purchase condition data matched in one or more matching steps, is the same as or higher than the provision price that is the total of the various provision condition data, then smooth and accurate operation can be maintained, and any price difference between the provision price and the purchase price that occurs in a transaction can be returned to the provider or purchaser.

When the provision price or purchase price has a specific margin, then it is preferable for the provision condition data and the purchase condition data to be matched ahead of time so that the lowest purchase price is the same as or higher than the highest provision price in the matching step.

In order to clarify when matching is performed and make it practical, it is preferable if the system is designed so that a match decision date as desired by the provider is received in the provision condition receiving step, and a match decision date as desired by the consumer is received in the purchase condition receiving step, and so that provision condition data and purchase condition data that are within the desired match decision date are selected in the selection step.

With a conventional auction, a provider or consumer with an unsuccessful bid had to go to the trouble of entering another auction as discussed above, but in order to solve this problem and allow a provider or consumer to participate automatically in the next matching, and thereby eliminate the trouble of re-entering an auction, and to improve the reliability of the system so that there will be an extremely high probability of a transaction being concluded, any provision condition data or purchase condition data not matched is preferably added automatically to the selection group in the selection step until the desired match decision date has passed.

To eliminate excessive competition or improper competition, and contribute to maintaining transactions at an appropriate price, it is preferable if the system is designed so that the provision prices included in the various provision condition data and the purchase price included in the various purchase condition data are disclosed only to the providers and purchasers that have submitted these.

The business support program provided by the data center 1 to each distributor X may also include a program for obtaining a billing and receipt service function, information management function, member management function, reception/vehicle allocation management function, vehicle location management function, or the like.

### Brief Description of Drawings

Fig. 1 is a function block diagram illustrating the data collection system according to the invention defined in Claim 1.
Fig. 2 is a function block diagram illustrating the data collection system according to the invention defined in Claim 3.
Fig. 3 is a function block diagram illustrating the provider's computer according to the invention defined in Claim 5.
Fig. 4 is a function block diagram illustrating the provider's computer according to the invention defined in Claim 6.
Fig. 5 is a function block diagram illustrating the data collection system according to the invention defined in Claim 7.
Fig. 6 is a function block diagram illustrating the provider's computer according to the invention defined in Claim 8.
Fig. 7 is a diagram of the overall device structure in one embodiment of the present invention.
Fig. 8 is a diagram of the internal device structure of a central computer that is the data collection system in this same embodiment.
Fig. 9 is a diagram of the internal device structure of the provider's computer in this same embodiment.
Fig. 10 is a function block diagram of the provider's computer and the central computer in this same embodiment.
Fig. 11 is a flow chart illustrating the operation of the central computer in this same embodiment.
Fig. 12 is a flow chart illustrating the operation of the provider's computer in this same embodiment.
Fig. 13 is a flow chart illustrating the operation of the provider's computer in this same embodiment.
Fig. 14 is a diagram illustrating the content of sell (buy) condition data in this same embodiment.
Fig. 15 is a diagram illustrating matching, and shows an example of the events leading up to a match in this same embodiment.
Fig. 16 is a diagram illustrating the content of transaction conclusion data in this same embodiment.
Fig. 17 is a flow chart illustrating the operation of the provider's computer in this same embodiment.
Fig. 18 is a flow chart illustrating the operation of the provider's computer in this same embodiment.
Fig. 19 is a flow chart illustrating the operation of the central computer in this same embodiment.
Fig. 20 is a map diagram illustrating how data is held in a transaction index data holding component in this same embodiment.
Fig. 21 is a flow chart illustrating the operation of the provider's computer in this same embodiment.
Fig. 22 is a flow chart illustrating the operation of the central computer in this same embodiment.
Fig. 23 is a function block diagram illustrating the provider's computer according to the invention defined in Claim 10.
Fig. 24 is a function block diagram illustrating the data collection system according to the invention defined in Claim 11.
Fig. 25 is a diagram of the overall structure in the embodiment in which the present invention is applied to the distribution industry.

### Best Mode For Carrying Out The Invention

Embodiments of the present invention will now be described through reference to the drawings.

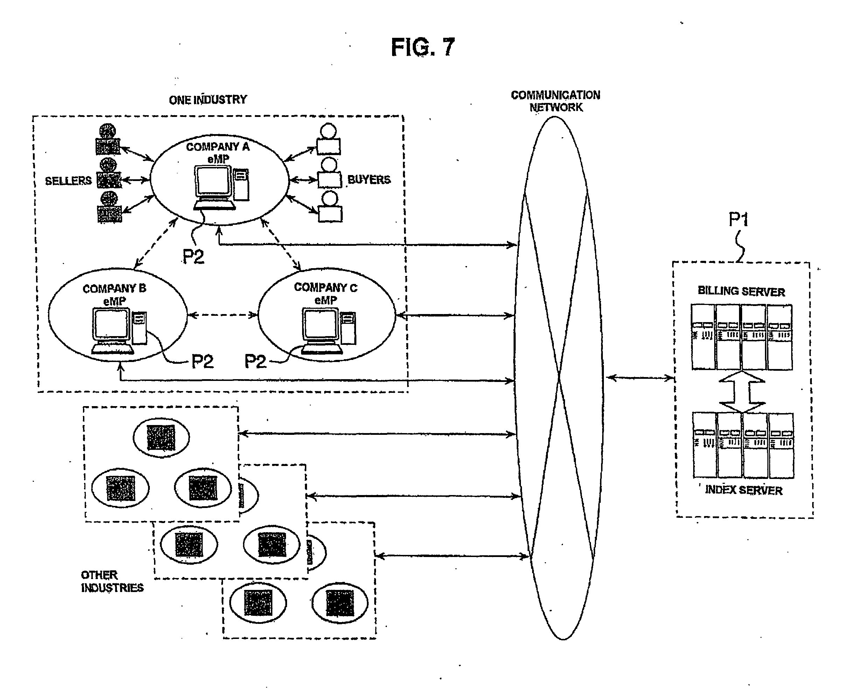

Fig. 7 is a diagram of the overall device structure in this embodiment. In this drawing, P1 is a central computer, and constitutes a data collection system. P2 is a provider's computer, used by a provider to provide a transaction support service. P1 and P2 are connected via a communication network such as the Internet so as to allow communication therebetween.

The transaction support service that is the specific business in this embodiment involves using a computer network to bring together buyers and sellers of a certain product or service and provide a so-called electronic marketplace (eMP) where parties who satisfy each other's conditions are matched up for a transaction. There are one or more of these eMPs.

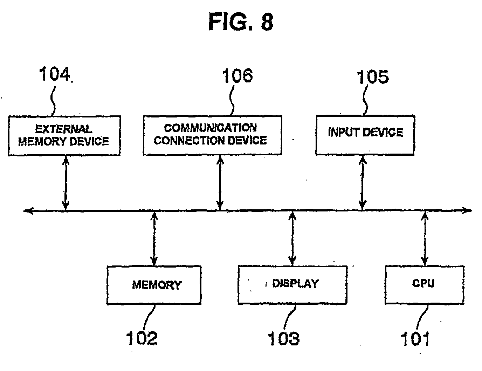

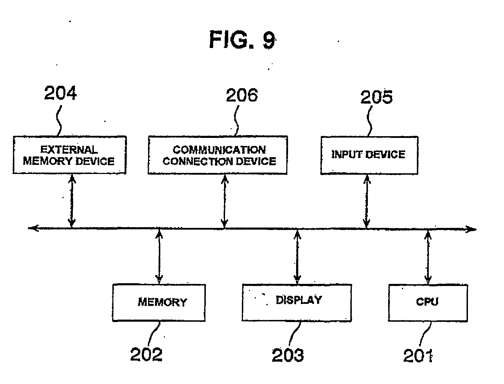

The central computer P1 has the various required server functions, and may be either a dedicated machine or a general-purpose computer. As shown in Fig. 8, this computer comprises a CPU 101, an internal memory 102, a hard disk drive or other such external memory device 104, a communication connection device 106 for connecting to the Internet via a telephone line or the like, a display 103, a keyboard or other such input device 105, and so forth.
As shown in Fig. 9, the provider's computer P2, same as the central computer P1, comprises a CPU 201, an internal memory 202, a hard disk drive or other such external memory device 204, a communication connection device 206 for connecting to the Internet via a telephone line or the like, a display 203, a keyboard or other such input device 205, and so forth, and may be a dedicated machine or a general-purpose computer.

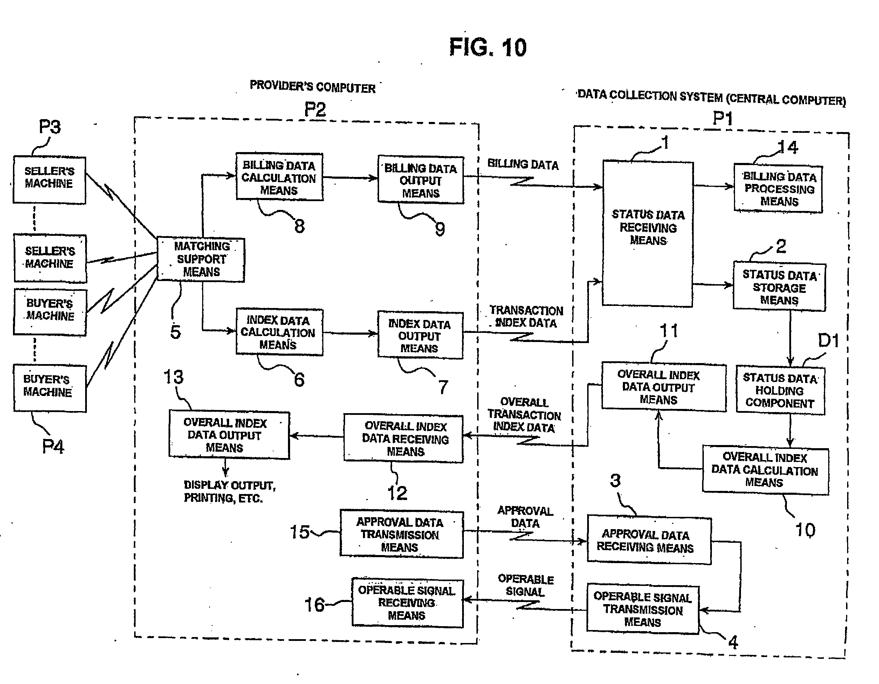

In this embodiment, the above-described central computer P1 actuates the above-described CPU 101 and peripheral devices according to a specific program stored (installed) in its internal memory 102, etc. As shown in Fig. 10, this computer has the functions of the status data receiving means 1, a billing data processing means 14, the status data storage means 2, a status data holding component D1, the overall index data calculation means 6, the overall index data output means 7, the approval data receiving means 3, the operable signal transmission means 4, and so on.

Meanwhile, the above-described provider's computer P2 actuates the above-described CPU 201 and peripheral devices according to a specific installed program. As shown in Fig. 10, this computer has the functions of the matching support means 5, the billing data calculation means 8, the billing data output means 9, the index data calculation means 6, the index data output means 7, the overall index data receiving means 12, the overall index data output means 13, an approval data transmission means 15, an operation approval signal receiving means 16, and so on. The program installed in this provider's computer P2 is distributed via a CD-ROM or other such recording medium, or is downloaded to the provider's computer P2 via the Internet or another such communication network.

The operation of the computers P1 and P2 will now be described along with the functions of the various above-described means.

First, the provider's computer P2 asks for input as to whether status data indicating all or part of the status of using the business support program may be sent to the central computer P1. "Status data" in this embodiment is transaction index data (data according to a transaction index) calculated on the basis of transaction results produced by a successful match. When this data is inputted, it is sent as approval data to the central computer P1.

The phrase "status of using the business support program" here includes results obtained by the use of said program.

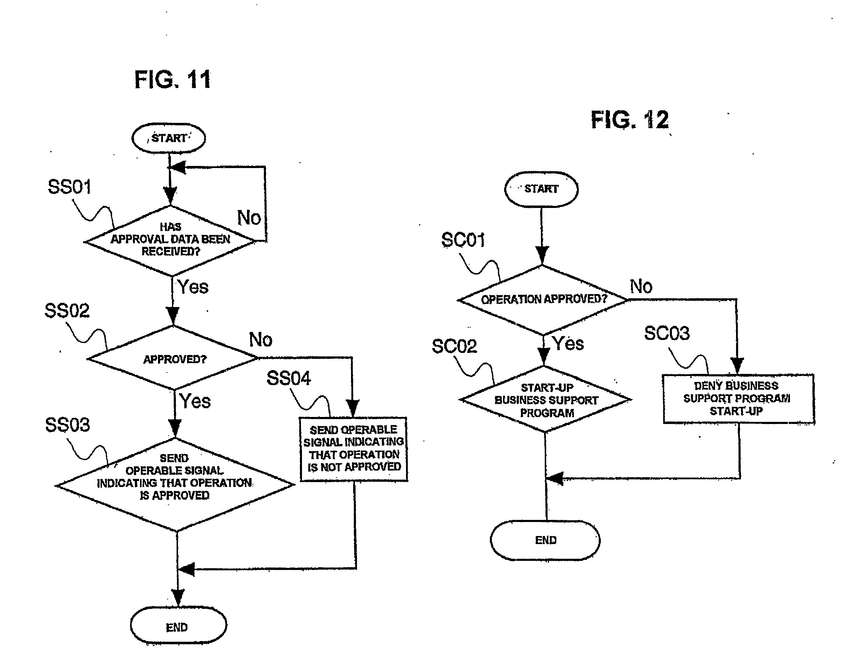

In the central computer P1, the approval data receiving means 3 receives the above-described approval data sent from the provider's computer P2 (step SS01 in Fig. 11).

A decision is then made as to whether or not this approval data indicates approval (step SS02 in Fig. 11).

Next, the operable signal transmission means 4 sends the provider's computer P2 an operable signal indicating that operation is permitted when the above-described approval data indicates approval (step SS03 in Fig. 11), and sends an operable signal indicating that operation is denied when there is no approval (step SS04 in Fig. 11).

The provider's computer P2 interprets the operable signal sent from the central computer P1 (step SC01 in Fig. 12). If the decision is that operation is permitted, the business support program is started up (step SC02 in Fig. 12), but if the signal indicates that operation is not permitted, start-up of the business support program is denied (step SC03 in Fig. 12).

Whether or not to install the business support program may be determined according to the above-described transmission approval, or a request for input of transmission approval may be submitted and the decision about whether operation is possible made every time the business support program is to be used.

The provider's computer P2 operates as follows on the basis of the business support program that has thus been activated.

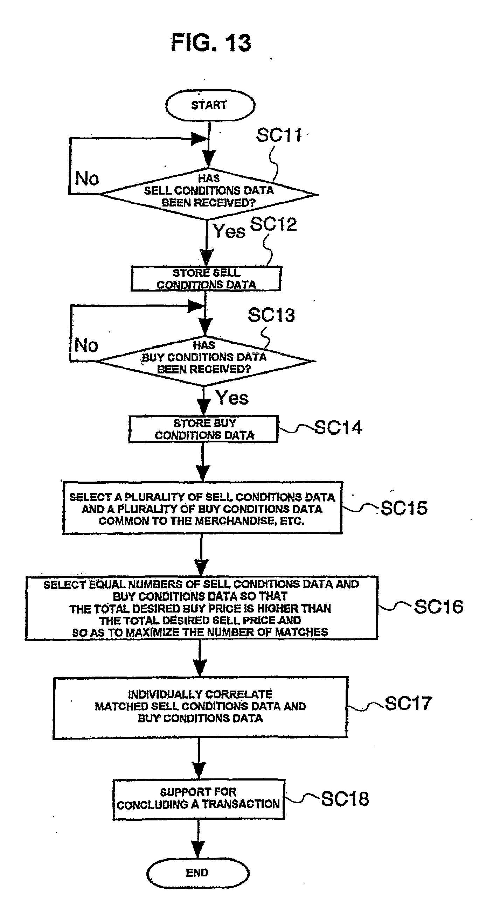

First, sell condition data indicating sell conditions, including the desired sell price of the merchandise or service, that has been sent from the terminal used by a seller is received (step SC11 in Fig. 13).

This sell condition data is then linked to that seller, and stored in a sell condition data holding component (not shown) set up in a specific region of the external memory device 204 (step SC12 in Fig. 13).

Meanwhile, buy condition data indicating buy conditions, including the desired buy price of the above-described merchandise or service, that has been sent from the terminal used by a buyer is received (step SC13 in Fig. 13).

This buy condition data is then linked to that buyer, and stored in a buy condition data holding component (not shown) set up in a specific region of the external memory device 204 (step SC14 in Fig. 13).

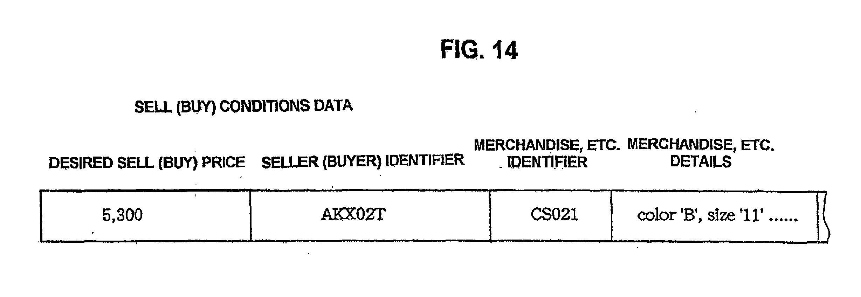

As shown in Fig. 14, the sell (buy) condition data here consists, for example, of the desired sell (buy) price, an identifier of the merchandise, etc., detailed information about the merchandise, etc., and so forth. The desired price individually submitted by the seller and buyer, and sometimes other information, is not revealed to the other party.

The term "linked" as used herein means that a password or other such identifier given to a seller or buyer is utilized to link the sell condition data-or buy condition data thereof to that seller or buyer, and also includes, for instance, linking to the identifier (such as an IP address) of the computer terminal P3 or P4 used by the seller or buyer. Also, in this embodiment, the various data, identifiers, and so forth are sent and received as files in the text format described by the markup language of the transaction in question, and the content thereof is interpreted by each computer.

Next, when the specified matching date arrives, a plurality of sell condition data and a plurality of buy condition data common to the merchandise or service are selected from the above-described sell condition data holding component and buy condition data holding component (step SC15 in Fig. 13).

The term "common" here includes being exactly the same, as well as partial matches, such as a specific shoe of a slightly different color. Specifically, the description format of the sell (buy) condition data is provided with strongly limiting conditions that absolutely must be the same, and weakly limiting conditions that allow for some discrepancy, and a decision is made according to this distinction.

The selected plurality of sell condition data is compared to the plurality of buy condition data, and regardless of whether the desired sell price included in the sell condition data is different from the desired buy price included in the buy condition data, those sell condition data and buy condition data that meet the specified condition become objects of same number matching (step SC16 in Fig. 13).

The specified condition is that the total desired buy price included in the matched buy condition data be higher than the total desired sell price included in the matched sell condition data, and the system is set up, for example, so that as many matches as possible can be obtained under this specified condition. In other examples, the monetary amount of the transaction may be maximized, or the price difference may be maximized.

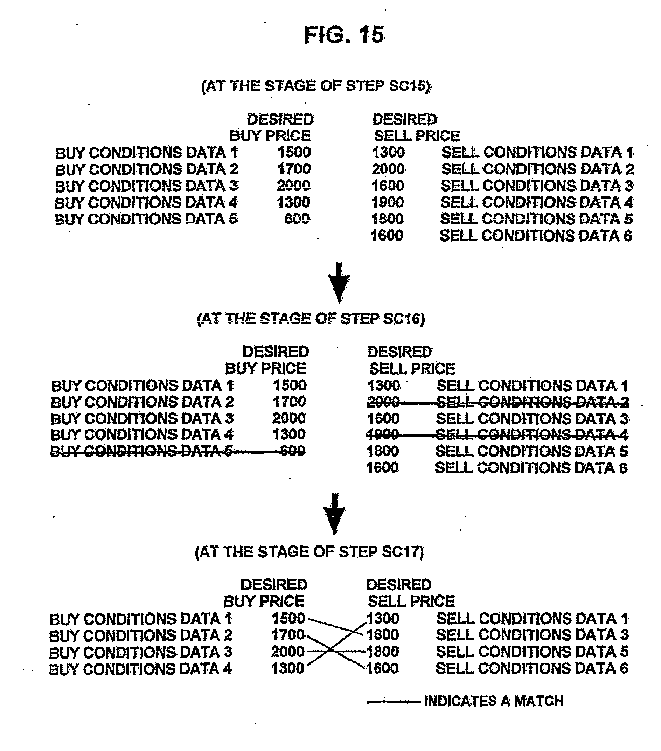

The matching sell condition data and buy condition data are then individually correlated, or matched (step SC17 in Fig. 13). There are various ways to combine the pairs here, but one approach is to match a high desired sell price with a high desired buy price. Fig. 15 shows an example of the process of matching a plurality of sell condition data and buy condition data according to the above-described steps SC15 to SC17.

Finally, the transaction is concluded between the seller and buyer that submitted the matched sell condition data and buy condition data, without any change to the desired sell price or the desired buy price (step SC18 in Fig. 13).

The above functions are carried out by the matching support means 5.

Next, the index data calculation means 6 calculates the transaction index data (information related to the transaction index) on the basis of the transaction results produced by a successful match.

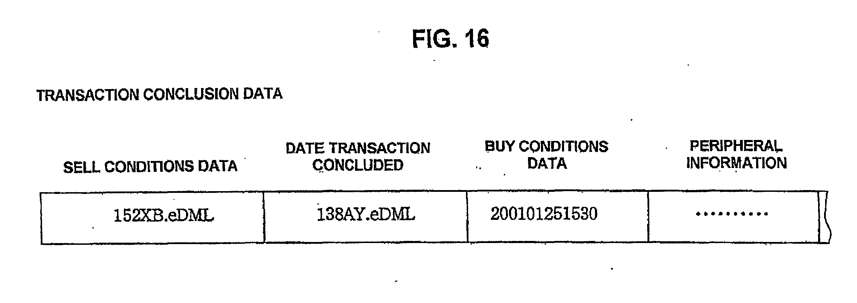

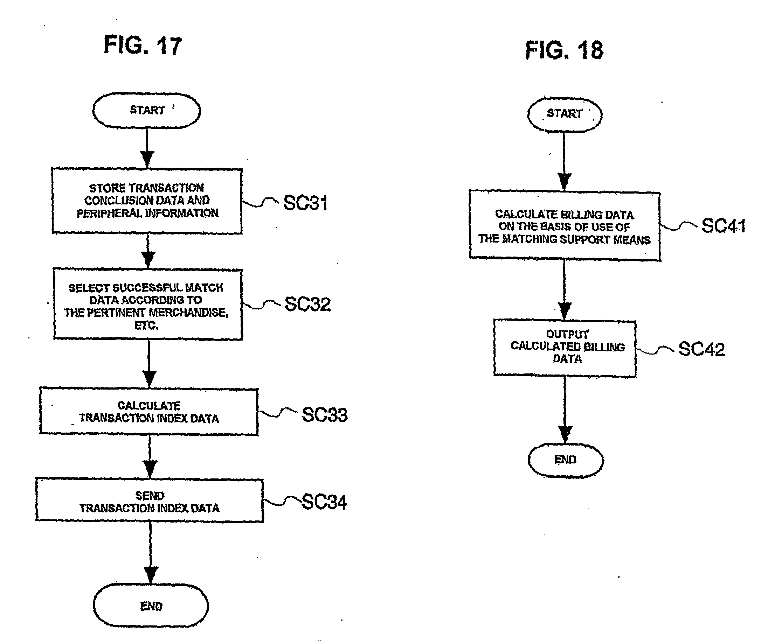

More specifically, sell condition data for which a transaction has been concluded by matching (or a sell condition data identifier for identifying this data) is paired with buy condition data (or a buy condition data identifier for identifying this data), resulting in transaction conclusion data that is the matching status data shown in Fig. 16, which is held in a transaction conclusion data holding component (not shown) set up in a specific region of the external memory device 204. At this point, the transaction conclusion date, and any peripheral information such as various information according to the merchandise or service of the transaction in question, are linked to the transaction conclusion data and stored in the transaction conclusion data holding component also (step SC31 in Fig. 17).

Transaction conclusion data according to a specific product or service for which a transaction has been concluded is selected for a certain period (such as the entire past, or a certain length of time from a certain date) (step SC32 in Fig. 17), and the transaction index data is calculated on the basis thereof (step SC33 in Fig. 17). This transaction index data indicates the average buy price (desired buy price) or sell price (desired sell price), as well as the lowest prices, highest prices, median prices, and so forth in concluded transactions in the eMP managed by the provider's computer P2. In this embodiment, this data includes identifiers for the merchandise, etc., of the transaction in question, and information according to this merchandise, etc.

This calculation may be performed at regular intervals, or in response to some kind of external trigger (such as a request from the central computer P1). When the calculation is made at a request, the system may be designed so that which transaction index data is being requested (such as which price of which product) can be specified.

Next, the index data output means 7 appends a provider identifier or an eMP identifier to the above-described calculated transaction index data and sends it to the central computer P1 (step SC34 in Fig. 17). Although not depicted in the drawings, this index data output means 7 also sometimes sends the calculated transaction index data by request to a seller's computer P3 or buyer's computer P4 belonging to that eMP.

Meanwhile, the billing data calculation means 8 calculates the above-described billing data on the basis of usage of the matching support means 5 (step SC41 in Fig. 18).

In this embodiment, the billed amount is calculated proportional to the number of successful matches, but various other scenarios are also possible, such as calculating the billed amount according to the transaction amount, calculating the billed amount according to the number of sell (buy) condition data entered, regardless of whether there was a successful match or not, using a fixed amount, and using a combination of the above.

After this, the billing data output means 9 outputs the calculated billing data (step SC42 in Fig. 18). More specifically, this data is outputted to the display or printer of the provider's computer P2, while the billing data is sent along with the eMP identifier to the central computer P1.

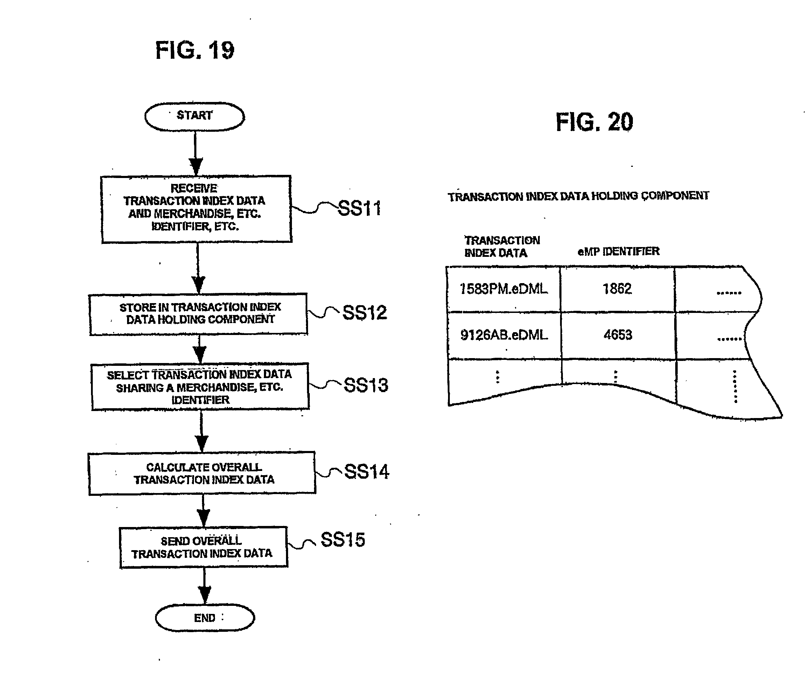

Meanwhile, in the central computer P1, the above-described status data receiving means 1 receives the transaction index data and the eMP identifier, etc., appended thereto that have been sent from the provider's computer P2 (step SS11 in Fig. 19). As shown in Fig. 20, these are stored in pairs in the status data holding component D1, which functions as the transaction index data holding component (step SS12 in Fig. 19).

Next, the index data calculation means 6 selects a plurality of transaction index data having common identifiers for merchandise, etc. (step SS13 in Fig. 19), and calculates the overall transaction index data on the basis of a specific calculation formula (step SS14 in Fig. 19). This overall transaction index data is calculated on the basis of the various transaction index data obtained from various eMPs, and indicates for common merchandise, etc., the overall average buy price (desired buy price) or sell price (desired sell price), as well as the lowest prices, highest prices, median prices, and so forth in transactions in some or all of the eMPs. This calculation may be performed at regular intervals, or in response to some kind of external trigger (such as a request from the provider's computer P2).

After this, the overall index data output means 11 sends the above-described calculated overall transaction index data to the various provider's computers P2 (step SS15 in Fig. 19).

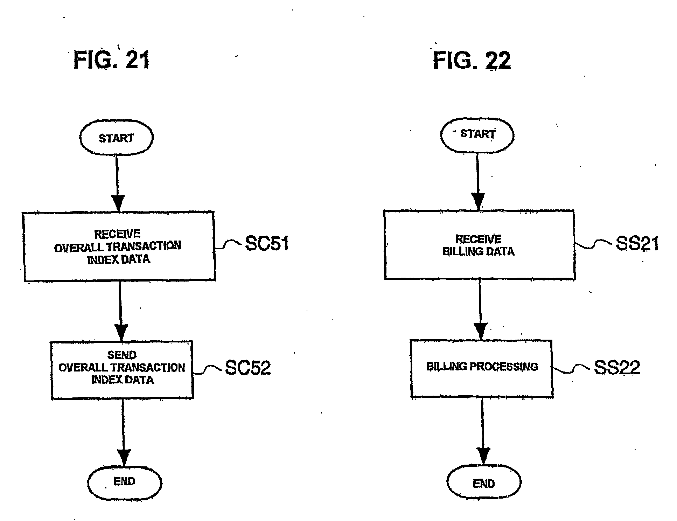

In the provider's computer P2, the overall index data receiving means 12 receives this overall transaction index data (step SC51 in Fig. 21), and the overall index data output means 13 sends it to a seller's or buyer's computer terminal P3 or P4 belonging to that eMP (step SC52 in Fig. 21), where the data is displayed.

Meanwhile, in the central computer P1, the status data receiving means 1, which also serves as the billing data receiving means, receives the billing data and eMP identifiers sent from the various provider's computers P2 (step SS21 in Fig. 22), and the billing data processing means performs various processing related to billing, such as automatic withdrawal from the provider's bank-account identified by the provider identifier, and printing billing statements (step SS22 in Fig. 22).

Therefore, with this embodiment constituted as above, the status of usage of a business support program for operating an eMP is managed all together by a central computer, an overall transaction index is calculated from various eMPs, which used to be independent from each other, and this index is disclosed to the various eMP operators (providers) and the parties participating in transactions in these eMPs, which promotes business transactions and also enhances reliability for the parties of the transaction, which in turn stimulates business transactions in an eMP.

Also, in particular in this embodiment, the transaction indexes produced by transactions for each eMP are also calculated and disclosed, so it is possible to promote more fair and appropriate business transactions through comparison to other eMPs in the same industry, for example.

Various modifications to this embodiment are also possible. For instance, the functions of the transaction index data calculation means or the billing data calculation means can be handled by the central computer, or the central computer may be provided integrally with the provider's computer.

Also, the transaction index may be calculated from not only the transaction conclusion results, but also the sell condition data or buy condition data for which there has not been a successful match yet.

### Industrial Applicability

As detailed above, with the present invention, transaction results and the business situation of providers of merchandise or services can be collected, and this information can be used to operate a market more efficiently, to stimulate transactions through information disclosure, and so on.

## Claims

1. A data collection system comprising:
a status data receiving means for receiving, upon an approval of a provider of merchandise or service, status data indicating all or part of a usage status of a business support program distributed to a provider; and
a status data storage means for storing status data received by said status data receiving means.

2. The data collection system according to Claim 1, said storage means storing a status data obtained from a plurality of providers in a common format.

3. The data collection system according to Claim 1, further comprising:
an approval data receiving means for receiving approval data indicating whether said provider has given approval; and
an operable signal transmission means for sending an operable signal indicating whether an operation of a computer is permitted on the basis of said business support program in a case in which received approval data indicates that approval has been granted.

4. The data collection system according to Claim 1, wherein
said business is a matching business in which buyers are matched up with sellers, and
said status data includes transaction index data indicating a transaction index calculated on the basis of a matching status.

5. The data collection system according to Claim 4, wherein said business support program installs functions in provider's computer which is used by said provider, said functions being in the form of:
a matching support means for supporting work of matching up buyers and sellers;
an index data calculation means for calculating transaction index data indicating a transaction index on the basis of said matching status; and
an index data output means for outputting said transaction index data.

6. The data collection system according to Claim 4, wherein
said status data includes billing data indicating charges for use of said matching support means; and
said business support program installs functions in said provider's computer, said functions being in the form of:
a billing data calculation means for calculating said billing data on the basis of use of said matching support means; and
a billing data output means for outputting said billing data.

7. The data collection system according to Claim 5, further comprising:
an overall index data calculation means for calculating overall transaction index data indicating overall information about a transaction index on the basis of said transaction index data received by said status data receiving means; and
an overall index data output means for outputting said overall transaction index data.

8. The data collection system according to Claim 7, wherein said business support program installs functions in the provider's computer, said functions being in the form of:
an overall index data receiving means for receiving said overall transaction index data; and
an overall index data output means for outputting said received overall transaction index data.

9. The data collection system according to Claim 1, wherein
said business is a matching business in which buyers are matched up with sellers, and
said status data includes matching status data according to a matching status.

10. The data collection system according to Claim 9, wherein said business support program installs functions in provider's computer which is used by said provider, said functions being in the form of:
a matching support means for supporting work of matching up buyers and sellers; and
a matching status data output means for outputting said matching status data.

11. The data collection system according to Claim 10, further comprising:
an overall index data calculation means for calculating overall transaction index data indicating overall information about a transaction index on the basis of matching status data received by said status data receiving means; and
an overall index data output means for outputting said overall transaction index data.

12. A data collection method rendering a computer to carry out:
a status data receiving step that receives status data indicating all or part of a usage status of a business support program distributed to a provider of merchandise or service upon an approval of said provider, and
a status data storage step that stores said status data received by said status data receiving means.

13. The data collection method according to Claim 12, wherein
said business is a matching business in which buyers are matched up with sellers, and
said status data includes transaction index data indicating a transaction index calculated on the basis of said matching status; and wherein
said method renders a computer to carry out:
an overall index data calculation step that calculates overall transaction index data indicating overall information about a transaction index on the basis of sand transaction index data received by said status data receiving means, and
an overall index data output step that outputs said overall transaction index data.

14. A business support program used in the data collection system according to Claim 1, wherein
said business is a matching business in which buyers are matched up with sellers, and said status data includes transaction index data indicating a transaction index calculated on the basis of a matching status; and
said program comprising:
a matching support step that supports work of matching up buyers and sellers,
an index data calculation step that calculates transaction index data indicating a transaction index on the basis of a matching status, and
an index data output step that outputs said transaction index data.

15. A transaction support system comprising:
a data collection system including:
a receiving means for receiving, upon an approval of a provider of merchandise or service, all or part of a usage status of a business support program distributed to said provider, and
a storage means for storing data received by said receiving means; and
a matching support means for supporting work of matching up providers and consumers by way of utilizing data stored in said storage means of said data collection system.

16. A data collection system comprising:
a receiving means for receiving, upon an approval of a distributor who is a provider of merchandise or service, all or part of a usage status of a business support program distributed to said distributor; and
a storage means for storing data received by said receiving means.

17. The data collection system according to Claim 16, wherein said data includes at least available vehicle information indicating an available vehicle status.

18. A transaction support system comprising:
the data collection system according to Claim 16 or 17; and
a matching support means for supporting work of matching up distributors and shippers, who are consumers, by way of utilizing data stored in said storage means of said data collection system.

19. The transaction support system according to Claim 18, further comprising:
a rental offer receiving means for receiving rental offer information about available vehicles from distributors; and
a cargo information provision means for providing cargo-related information to distributors according to a received rental offer information.

20. The transaction support system according to Claim 18 or 19, comprising a cargo information provision means for selecting an available vehicle information from stored data and providing a cargo-related information corresponding to said available vehicle information to distributors.
